# EUROPÄISCHE PATENTSCHRIFT

(11) **EP 1 136 137 B1**
(45) Veröffentlichungstag und Bekanntmachung des Hinweises auf die Patenterteilung: **25.06.2008**
(21) Anmeldenummer: 00105823.9
(22) Anmeldetag: 20.03.2000
(51) Int. Cl.: B05C 3/12, B05C 11/02, B29B 15/12

(54) **Vorrichtung und Verfahren zum Auftragen von Beschichtungsmaterial**
Device and method for applying a coating material
Dispositif et procédé d'application d'un matériau de revêtement

(43) Veröffentlichungstag der Anmeldung: 26.09.2001
(73) Patentinhaber: SOLIPAT AG, CH-6300 Zug (CH)
(72) Erfinder: Ulli, Andreas, 9305 Berg (CH)
(74) Vertreter: Müller, Christoph Emanuel

(56) Entgegenhaltungen:
- WO-A-92/13652
- DE-A- 4 111 255
- US-A- 5 415 720
- PATENT ABSTRACTS OF JAPAN vol. 1995, no. 07, 31. August 1995 (1995-08-31) & JP 07 088412 A (SUMITOMO METAL IND LTD), 4. April 1995 (1995-04-04)

## Beschreibung

Die Erfindung betrifft eine Vorrichtung und ein Verfahren zum Auftragen von Beschichtungsmaterial beim Herstellen beschichteter und/oder imprägnierter Flächengebilde.

Es sind eine Vielzahl von Verfahren und Vorrichtungen bekannt, die zum Herstellen beschichteter und/oder imprägnierter Flächengebilde verwendet werden.

Damit können beispielsweise Substrate aus verschiedenen Materialien, wie z.B. Kunststoff, Blech oder Glasfasern beschichtet werden. Bei Fasergebilden wie z.B. Geweben, Vliesen oder Gewirken werden solche Verfahren nicht nur zum Beschichten sondern auch zum Verfestigen und Füllen der Fasergebilde eingesetzt (Imprägnieren).

Zur Beschichtung können sowohl Ein- als auch Zwei-Komponenten-Systeme oder Mischungen vorgesehen werden, die in einem flüssigen Zustand beispielsweise durch Extrusion, Streichen oder Tauchen auf das Substrat aufgebracht werden. Eine besonders bekannte Anwendung solcher Verfahren besteht im Beschichten von Fasergebilden zur Herstellung von Prepregs für die Leiterplattenherstellung.

Dabei bestehen hohe Anforderungen an die Genauigkeit. Die Dicke des beschichteten und/oder imprägnierten Flächengebildes muss innerhalb von sehr kleinen Toleranzbereichen bleiben. Beschichtete Flächengebilde haben typischerweise eine Dicke in der Grössenordnung von Zehntelmillimetern - die Toleranzen bewegen sich im Mikrometerbereich.

Es ist deshalb bereits vorgeschlagen worden (siehe z.B. nicht vorveröffentlichte WO-A-0029126), nach dem Auftrag des Beschichtungsmaterials einen einstellbaren Bemessungsspalt vorzusehen, der durch zwei gegen die Warenbahn laufende Walzen gebildet wird.

Es hat sich aber herausgestellt, dass mit diesem bekannten Verfahren die geforderten Toleranzen nicht mehr ohne weiteres erreicht werden können. Insbesondere lässt sich eine ausreichend grosse Zentrizität von Walzenoberfläche und Welle nicht erzielen. Ein gewisser Unrundlauf der Walzen lässt sich daher nicht vermeiden.

Die US-A-5415720 zeigt eine Leim Auftragsvorrichtung für Wellpappe. Eine Leimauftragswalze bildet mit einer Riffelwalze einen Leimspalt, dessen Grösse indirekt über eine Abstandsmessung zwischen einer Messoberfläche der Riffelwalze und einem Leimwerk gemessen wird.

Die WO-A-9213652 schlägt vor, beim Metallwalzen einen Walzenspalt über koaxial angeordnete Messflächen mit reduziertem Ballendurchmesser zu messen. Auf beide Messflächen ist jeweils ein Sensor gerichtet, welcher berührungslos den Abstand zur Messfläche misst. Aus den Messungen kann der Walzspalt bestimmt werden.

Es ist deshalb eine Aufgabe der vorliegenden Erfindung, die Nachteile des Bekannten zu vermeiden, insbesondere also eine Vorrichtung und ein Verfahren zum Auftragen von Beschichtungsmaterial zu schaffen, mit welchem die Herstellung beschichteter und/oder imprägnierter Flächengebilde mit höchster Genauigkeit möglich ist.

Erfindungsgemäss wird diese Aufgabe mit einer Vorrichtung und einem Verfahren mit den Merkmalen des kennzeichnenden Teils der unabhängigen Patentansprüche gelöst.

Die erfindungsgemässe Vorrichtung zum Auftragen von Beschichtungsmaterial bei der Herstellung beschichteter und/oder imprägnierter Flächengebilde weist eine oder mehrere an sich bekannte Auftragvorrichtungen zum Auftrag der Beschichtung auf das Flächengebilde auf. In Laufrichtung des Flächengebildes nach der Auftragvorrichtung ist ein Bemessungsspalt zur Bemessung der Dicke des durch den Spalt bewegbaren beschichteten und/oder imprägnierten Flächengebildes vorgesehen. Die Breite des Bemessungsspaltes ist vorbestimmbar, sodass die Dicke des beschichteten und/oder imprägnierten Flächengebildes eingestellt werden kann. Der Bemessungsspalt wird durch wenigstens eine mit einer Kontaktfläche gegen das Flächengebilde anpressbaren Dosierwalze und eine Gegenkontaktfläche begrenzt. Der Dosierwalze und der Gegenkontaktfläche ist je eine Messfläche zugeordnet. Der Abstand der Messflächen ist grösser als der Bemessungsspalt. Dies erlaubt es, Messsensoren zwischen den Messflächen zu plazieren, die im Bemessungsspalt keinen Platz hätten. Insbesondere ist die wenigstens eine Dosierwalze in Achsrichtung an wenigstens einem Ende mit einer zylindrischen Messfläche versehen. Die zylindrische Messfläche weist einen geringeren Durchmesser auf als die Kontaktfläche der Walze. Die Vorrichtung weist ausserdem eine Messanordnung auf, die zum Messen des Abstandes zwischen der Messfläche und der bezogen auf die Gegenkontaktfläche definierten Referenzmessfläche dient. Die Messflächen werden beim Herstellvorgang der Dosierwalze und der Gegenkontaktfläche in genau. definierter Lage zu den Kontaktflächen gebildet.

Mit der oder den zusätzlich vorgesehenen Messflächen lässt sich die Breite des Bemessungsspaltes indirekt sehr präzise bestimmen. Da die zylindrische Messfläche einen geringeren Durchmesser aufweist als die Kontaktfläche der Walze lässt sich der Abstand zwischen Messfläche und der Referenzmessfläche mit einem dazwischen liegenden Messsensor problemlos messen. Ein allfälliger Unrundlauf zwischen Lagerung der Walze und der Kontaktfläche der Walze ist aufgrund der Messung des Abstandes zwischen den Messflächen korrigierbar, weil die Messflächen in genau definierter Relation zur Kontaktfläche angeordnet sind.

Es wäre aber auch denkbar, Exzentrizitäten zwischen der Kontaktfläche und der Messfläche zuzulassen, in einer Referenzmessung zu bestimmen und danach rechnerisch auszugleichen.

Gemäss einem besonders bevorzugten Ausführungsbeispiel ist die Gegenkontaktfläche als zweiten Walze ausgebildet. Die Referenzmessfläche ist als zweite zylindrische Messfläche ausgebildet, die an wenigstens einem Ende der zweiten Walze in Achsrichtung angeordnet ist, und die einen geringeren Durchmesser aufweist als die Kontaktfläche der zweiten Walze. Die zweite Messfläche ist ebenfalls zylindrisch und konzentrisch mit der Kontaktfläche der zweiten Walze angeordnet. Indem der Abstand zwischen den beiden zylindrischen, konzentrisch und in bekanntem Abstand zu den Kontaktflächen angeordneten Messflächen gemessen wird, lässt sich indirekt die Breite des Bemessungsspaltes sehr genau bestimmen.

Vorteilhaft drehen sich die beiden Walzen in Gegenrichtung zur Bewegungsrichtung des Flächengebildes. Gemäss einem besonders bevorzugten Ausführungsbeispiel weist die zylindrische Messfläche oder weisen die zylindrischen Messflächen einen Durchmesser auf, der mehr als 50%, vorteilhaft etwa 70% des Durchmessers der Kontaktfläche oder der Kontaktflächen der Walze oder der Walzen entspricht. Der Durchmesser der Messfläche soll möglichst gross gewählt werden. Je näher die Messfläche bei der Kontaktfläche liegt um so besser können Exzentrizitäten vermieden werden, weil der (geringere) Abstand zwischen Messfläche und Kontakfläche präziser kontrollierbar ist. Die Messfläche kann aber nicht einen gleichen Durchmesser wie die Kontaktfläche aufweisen. In diesem Fall würden die Messflächen so nahe beieinander liegen, dass keine Sensoren dazwischen positioniert werden könnten. Ausserdem bestände die Gefahr von Verschmutzung der Messfläche durch mit den Walzen abgerakeltes Beschichtungsmaterial.

Gemäss einem weiteren bevorzugten Ausführungsbeispiel sind die Walzen so drehbar gelagert, dass das Lager der einen Walze fix ist und dass das Lager der anderen Walze bezogen auf die erste Walze in einer Richtung senkrecht zur Bewegungsrichtung des Flächengebildes verschiebbar ist. Die Dicke des Bemessungsspaltes lässt sich durch Verschieben der zweiten Walze gegen die erste Walze hin oder von dieser weg einstellen.

Gemäss einem bevorzugten Ausführungsbeispiel werden die beiden Walzen mit einer Pneumatik mit einer vorbestimmten Kraft zusammengedrückt. Die verschiebbare Walze ist zum Ausgleichen eines Unrundlaufs gegen die oder mit der Kraft der Pneumatik nach aussen drückbar oder nach innen verschiebbar, insbesondere mit einem piezoelektrischen Element. Der Einsatz eines piezoelektrischen Elementes erlaubt auf besonders einfache Weise eine präzise Einstellung der Dicke des Bemessungsspaltes in Abhängigkeit des gemessenen Abstandes zwischen den Messflächen. Mit einer solchen Anordnung lässt sich die Dicke des Bemessungsspaltes auch einfach regeln (indirekt über die Regelung des Abstandes zwischen den Messflächen). Die Vorrichtung kann ausserdem mit einer Einstellanordnung zum Einstellen der Spaltbreite versehen sein. Dabei ist es zusätzlich denkbar, die Dicke des beschichteten Flächengebildes zu Messen und über die Einstellanordnung zu regeln. Die Einstellung der Spaltbreite mit dem piezoelektrischen Element dient dem Ausgleich eines Unrundlaufs, die Einstellanordnung dient zur Kontrolle der Dicke insgesamt.

Vorteilhaft kann ausserdem zwischen der Kontaktfläche und der Messfläche der Walze ein Hinterschnitt angeordnet sein. Der Hinterschnitt vermeidet eine Verschmutzung der Messfläche durch mit der Kontaktfläche vom Flächengebilde abgerakeltes Beschichtungsmaterial.

Die Walze oder die Walzen sind ausserdem in bekannter Weise mit einem Rakel versehen, mit welchem an der Kontaktfläche haftendes Beschichtungsmaterial entfernt und vorteilhaft wieder der Auftragvorrichtung zugeführt wird.

Die Messanordnung besteht vorteilhaft aus einem berührungslosen Sensor, beispielsweise einem Wirbelstromaufnehmer. Auch andere Sensoren, z.B. optische wären denkbar.

Das erfindungsgemässe Verfahren zum Herstellen beschichteter und/oder imprägnierter Flächengebilde lässt sich besonders einfach mit einer Vorrichtung der beschriebenen Art durchführen. Das beschichtete und/oder imprägnierte Flächengebilde wird durch einen einstellbaren Bemessungsspalt zwischen zwei Kontaktflächen durchgeführt. Erfindungsgemäss wird der Abstand zwischen in Bezug auf die Kontaktflächen definierten Messflächen, die in grösserem Abstand zueinander liegen, als die Kontaktflächen gemessen. Insbesondere wird der Abstand zwischen einer Messfläche mit geringerem Durchmesser als die zylindrische Kontaktfläche und einer in Bezug auf die zweite Kontaktfläche definierten Referenzmessfläche gemessen. Ausgehend vom Resultat dieser Messung wird die Breite des Bemessungsspaltes eingestellt, vorzugsweise geregelt. Die Erfindung beruht also in erster Linie darauf, dass zusätzliche Messflächen vorgesehen werden, deren gegenseitiger Abstand ohne Einschränkung durch die Dosierwalzenkonstruktion frei gewählt werden kann.

Die Erfindung wird im folgenden in Ausführungsbeispielen und an Hand der Zeichnungen näher erläutert. Es zeigen:
- Figur 1: eine schematische Darstellung einer erfindungsgemässen Vorrichtung,
- Figur 2: eine schematische Darstellung der Lagerung von zwei Kontaktwalzen einer erfindungsgemässen Vorrichtung und
- Figur 3: eine schematische Darstellung eines alternativen Ausführungsbeispiels.

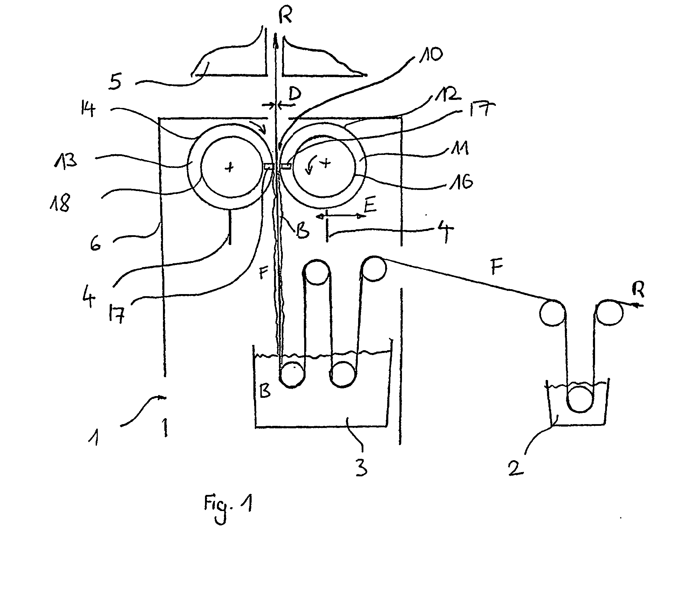

In Figur 1 ist schematisch eine Vorrichtung 1 gezeigt, die zum Herstellen eines beschichteten oder imprägnierten Flächengebildes F dient. Das Flächengebilde F ist typischerweise eine Warenbahn, z.B. ein Glasfasergewebe. Das Flächengebilde F wird in einer Bewegungsrichtung R zuerst in einer Vorbefeuchtung 2 befeuchtet und anschliessend in einer Imprägnierstation 3 mit Beschichtungsmaterial B versehen. Die Dicke D des beschichteten Flächengebildes wird in einem Dosierwerk 6 überprüft. Das derart beschichtete und/oder imprägnierte Flächengebilde F wird anschliessend einem Trockner 5 zugeführt, wo das Beschichtungsmaterial B auf dem Flächengebilde F ausgehärtet wird.

Der Trockner 5, die Imprägnierstation 3 und die Vorbefeuchtung 2 sind allgemein übliche Komponenten und werden deshalb hier nicht im Detail beschrieben.

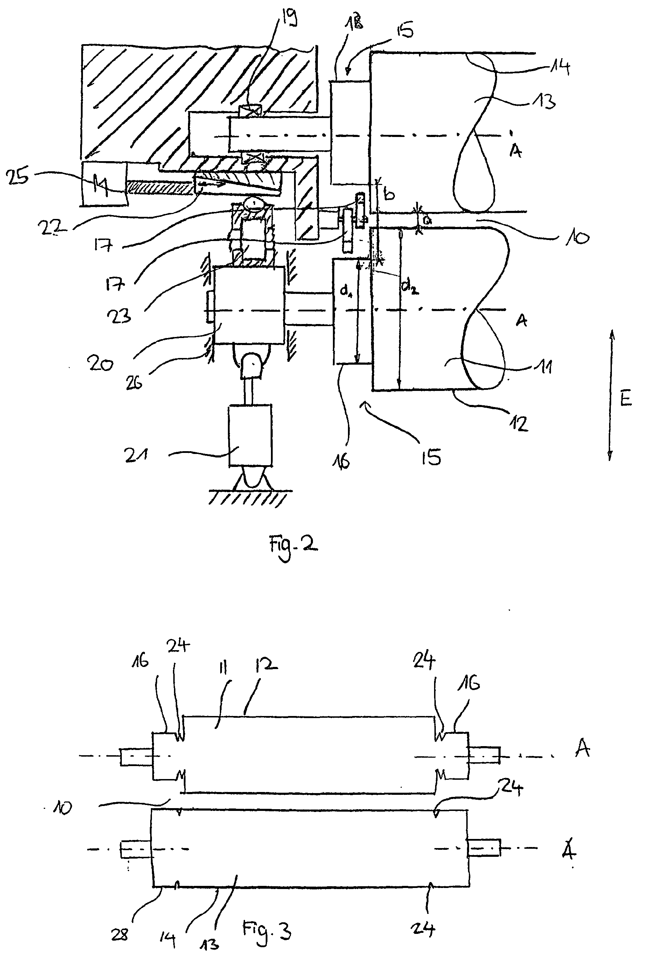

Das Dosierwerk 6 weist in an sich bekannter Weise zwei Dosierwalzen 11, 13 auf. Die Dosierwalzen 11, 13 bilden Kontaktflächen 12, 14 für das beschichtete Flächengebilde F. Zwischen den Kontaktflächen 12, 14 wird ein Bemessungsspalt 10 gebildet. Die Breite a (siehe Figur 2) des Bemessungsspaltes 10 definiert die Dicke D des beschichteten/imprägnierten Flächengebildes F.

Das Flächengebilde F wird in vertikaler Richtung zwischen den Dosierwalzen 11, 13 hindurchgeführt. Die Dosierwalzen 11, 13 drehen sich gegen die Bewegungsrichtung R des Flächengebildes. Typischerweise drehen die Dosierwalzen 11, 13 mit etwa 4 Umdrehungen pro Minute, was etwa 3 Metern pro Minute entspricht. Durch den Kontakt des beschichteten Flächengebildes F mit den Kontaktflächen 12, 14 wird überflüssiges Beschichtungsmaterial B auf dem Flächengebilde von diesem entfernt. Mittels einem Rakel 4 wird das an der Kontaktfläche 12, 14 der Dosierwalzen 11, 13 haftende Beschichtungsmaterial abgerakelt.

Die eine Dosierwalze 11 ist in einer Richtung E senkrecht zum Flächengebilde F gegen die andere Dosierwalze 13 hin verschiebbar. Dadurch lässt sich die Breite a des Bemessungsspaltes 10 einstellen. Die zweite Dosierwalze 13 ist fest gelagert.

Die Breite a des Bemessungsspaltes 10 beträgt bei typischen Anwendungen etwa 0,3 mm. Aus diesem Grund ist es nicht möglich den Abstand zwischen den Kontaktflächen 12, 14 direkt zu messen.

Deshalb ist wenigstens eine der Dosierwalzen 11, 13, vorzugsweise beide Dosierwalzen 11, 13 mit einer Messfläche 16, 18 versehen. Die Messflächen 16, 18 sind in Achsrichtung A an beiden Enden 15 der Dosierwalzen 11, 13 angeordnet. Die Messflächen 16, 18 verlaufen konzentrisch zu den Kontaktflächen 12, 14. Die Dosierwalzen 11, 13 sind als Drehteile hergestellt, wobei bei der Bearbeitung der Messflächen 16, 18 die Kontaktflächen 12, 14 als Referenz dienen. Selbst bei einem allfälligen Unrundlauf der Dosierwalzen 11, 13 besteht eine genau definierte Beziehung zwischen den Messflächen 16, 18 und den entsprechenden Kontaktflächen 12, 14.

Die Vorrichtung 1 ist ausserdem mit Messsensoren 17 versehen, die den Abstand zwischen den Messflächen 16, 18 messen. Die Messsensoren 17 sind typischerweise berührungslose Sensoren, z.B. Wirbelstromaufnehmer des Herstellers Vibrometer SA.

In Figur 2 ist die Lagerung der beiden Dosierwalzen 11, 13 vergrössert dargestellt. Eine erste Dosierwalze 13 mit einer Kontaktfläche 14 ist fix in einem Lager 19 gelagert. Der Durchmesser der Messfläche 18 ist grösser als der Durchmesser der Welle der Dosierwalze.

Die zweite Dosierwalze 11 mit der Kontaktfläche 12 ist in einer Lagerschale 20 auf einer Linearführung 26 in einer Richtung E senkrecht zum Flächengebilde F gegen die erste Dosierwalze 13 verschiebbar gelagert. Die Lagerschale 20 für die Dosierwalze 11 ist mit einem Pneumatikzylinder 21 gegen ein piezoelektrisches Element 23 gespannt. Das piezoelektrische Element 23 ist auf einem mittels einer Gewindespindel 25 und einem Motor M verschiebbaren Doppelkeil 22 abgestützt.

Zum Einstellen eines Bemessungsspalts 10 mit einer gewünschten Spaltbreite a wird zuerst der Spalt a durch Verschieben des Doppelkeils 22 auf den gewünschten Wert eingestellt. Dieser Wert beträgt typischerweise 0,3 mm. Die beiden Wirbelstromaufnehmer 17 werden zwischen den Messflächen 16, 18 angeordnet, die im Abstand b zueinander stehen. Die Messsensoren 17 werden typischerweise 0,1 bzw. 0,2 mm entfernt von der Messoberfläche 16 bzw. 18 positioniert. Im Betrieb messen die Messsenoren 17 laufend den Abstand zu der jeweiligen Messfläche 16 bzw. 18. Daraus lässt sich der Abstand b zwischen Messflächen 16, 18 bestimmen. Aufgrund der genau definierten Beziehung zwischen den Messflächen 16, 18 und den Kontaktflächen 12, 14 entspricht eine Änderung des Abstandes b zwischen den Messflächen 16, 18 aufgrund eines Unrundlaufs der Änderung der Spaltbreite a zwischen den Kontaktflächen 12, 14. Eine präzise Überwachung ist also möglich, weil die Messflächen präzise, z.B. 16, 18 ausgehend von den Kontaktflächen 12, 14 als Referenz geformt werden.

Der Abstand b zwischen den Messflächen 16, 18 wird über die Messsensoren 17 geregelt. Eine vom Messwert der Messsensoren abhängige Spannung wird am piezoelektrischen Element 23 angelegt. In der Ausgangslage wird das piezoelektrische Element 23 typischerweise mit einer Spannung von 500 Volt beaufschlagt. Durch Variation der Spannung zwischen 0 und 1'000 Volt lässt sich die Dosierwalze 11 in beide Richtung verschieben, wodurch sich ein allfälliger Unrundlauf der Dosierwalzen 11, 13 ausgleichen lässt. Der Abstand b zwischen den Messflächen 18 und 16 wird also über das piezoelektrische Element 23 (Stellgrösse: Spannung am piezoelektrischen Element) geregelt. Der Regelkreis ist in Figur 2 aus darstellerischen Gründen nicht gezeigt.

Die erfindungsgemässe Vorrichtung gelangt insbesondere bei der Imprägnierung von Flächengebilden mit lösungsmittelhaltigen Harzen zum Einsatz. Es ist deshalb wichtig, dass alle eingesetzten Elemente explosionssicher sind. Als Messsensoren 17 werden deshalb Wirbelstromaufnehmer (Hersteller Vibrometer SA) verwendet. Das piezoelektrische Element 23 ist explosionssicher in einem Gehäuse untergebracht.

Der Pneumatikzylinder 21, die Lagerschale 20, das piezoelektrische Element 23, der Doppelkeil 22 und das Lager 19 liegen in einer Ebene.

Der Durchmesser d1 der Messflächen 16, 18 soll so gross wie möglich gewählt werden. Auf diese Weise lassen sich möglichst geringe Toleranzen gegenüber den Kontaktflächen 12, 14 erzielen. Die Kontaktflächen 12, 14 weisen einen Durchmesser d2 auf. In einem bestimmten Ausführungsbeispiel beträgt der Durchmesser d2 der Kontaktflächen 12, 14 240mm, während der Durchmesser d1 der Messflächen 16, 18 170mm beträgt. Der Durchmesser d1 wird gerade so gross gewählt, dass die Messsensoren 17 noch zwischen den Messflächen 16, 18 positioniert werden können.

Die unterschiedlichen Durchmesser d1, d2 verhindern ausserdem die Verschmutzung der Messflächen 16, 18 von auf den Kontaktflächen 12, 14 haftendem Beschichtungsmaterial B.

Die Regelung der Spaltbreite a erfolgt mit einer Frequenz von etwa 30 Herz.

In Figur 3 ist ein alternatives Ausführungsbeispiel schematisch dargestellt. Nach diesem Beispiel ist auch denkbar, nur die eine Dosierwalze 11 mit einer Messfläche 16 mit geringerem Durchmesser zu versehen, während die Messfläche 28 an der anderen Dosierwalze 13 als Fortsetzung der Kontaktfläche 14 ausgebildet ist. Auch diese Anordnung ermöglicht die Positionierung von Messsensoren zwischen den beiden Dosierwalzen 11, 13. Im Ausführungsbeispiel in Figur 3 ist ausserdem eine Hinterschneidung 24 zwischen der Messfläche 16 und der Kontaktfläche 12 der einen Dosierwalze 11 gezeigt. Die Hinterschneidung 24 vermeidet einen Übertritt von Beschichtungsmaterial M von der Kontaktfläche 12 auf die Messfläche 16. Ebenso ist eine Hinterschneidung 24 auf der anderen Dosierwalze 13 vorgesehen, die deren Kontaktfläche 14 von der Messfläche 28 abtrennt.

Bevorzugt sind die Messflächen in Achsrichtung A gesehen auf beiden Seiten der Walzen 11, 13 angeordnet - ebenso sind auch Messsensoren beidseitig angeordnet. Es ist aber auch denkbar die Messung nur auf einer Seite vorzunehmen.

Bei gewissen Anwendungen ist es auch denkbar, den Bemessungspalt nur auf einer Seite mit einer drehbaren Walze zu definieren, während das Flächengebilde auf der anderen Seite über eine fixe Gegenkontaktfläche geführt wird.

## Patentansprüche

1. Vorrichtung (1) zum Auftragen von Beschichtungsmaterial (B) beim Herstellen beschichteter und/oder imprägnierter Flächengebilde (F),
mit wenigstens einer Auftragvorrichtung (2, 3) zum Auftragen der Beschichtung (B) auf das Flächengebilde (F),
und mit einem Bemessungsspalt (10) zur Bemessung der Dicke (D) des durch den Spalt (10) bewegbaren beschichteten und/oder imprägnierten Flächengebildes (F),
wobei die Breite (a) des Bemessungsspaltes (10) vorbestimmbar ist und
wobei der Bemessungsspalt (10) durch wenigstens eine mit einer Kontaktfläche (12) gegen das Flächengebilde (F) anpressbaren Dosierwalze (11) und durch eine Gegenkontaktfläche (14) definiert wird,
**dadurch gekennzeichnet, dass** der Dosierwalze (11) und der Kontaktfläche (14) je eine Messfläche (16, 18, 28) zugeordnet ist, deren Abstand (b) zueinander grösser ist, als die Spaltbreite (a),
dass der Bemessungsspalt (10) in Laufrichtung des Flächengebildes (F) nach der Auftragvorrichtung (2,3) vorgesehen ist,
dass insbesondere die Dosierwalze (11) in Achsrichtung (A) wenigstens an einem Ende (15) mit einer zylindrischen Messfläche (16) versehen ist, deren Durchmesser (d1) kleiner ist als der Durchmesser der Kontaktfläche (12) der Dosierwalze (11)
und dass die Vorrichtung (1) eine Messanordnung (17) zum Messen des Abstandes (b) zwischen der Messfläche (16) und einer bezogen auf die Gegenkontaktfläche (14) definierte Referenzmessfläche (18, 28) aufweist.

2. Vorrichtung nach Anspruch 1, **dadurch gekennzeichnet, dass** die Gegenkontaktfläche als zweite Dosierwalze (13) ausgebildet ist und dass die Referenzmessfläche als zweite zylindrische Messfläche (18) ausgebildet ist, deren Durchmesser (d1) kleiner ist als der Durchmesser (d2) der zweiten Walze (13).

3. Vorrichtung nach Anspruch 2, **dadurch gekennzeichnet, dass** die Dosierwalzen (11, 13) in Gegenrichtung zur Bewegungsrichtung (R) des Flächengebildes (F) drehbar gelagert sind.

4. Vorrichtung nach einem der Ansprüche 1 bis 3, **dadurch gekennzeichnet, dass** die zylindrische Messfläche (16) oder die zylindrischen Messflächen (16, 18) einen Durchmesser (d1) aufweisen, der mehr als 50%, vorzugsweise etwa 70% des Durchmesser (d2) der Kontaktflächen (12, 14) entspricht.

5. Vorrichtung nach Anspruch 3, **dadurch gekennzeichnet, dass** die Walzen (11, 13) drehbar gelagert sind,
wobei das Lager (19) einer ersten Walze (13) fest ist und
wobei das Lager (20) der zweiten Dosierwalze (11) bezogen auf die andere Dosierwalze (13) in einer Richtung (E) senkrecht zum Flächengebilde (F) zum Ausgleichen eines Unrundlaufs verschiebbar ist.

6. Vorrichtung nach Anspruch 5, **dadurch gekennzeichnet, dass** die eine Dosierwalze (11) mit einem Pneumatikzylinder (21) mit einer vorbestimmten Kraft gegen die andere Dosierwalze (13) drückbar ist und
dass die Spaltbreite (a) des Bemessungsspaltes (10) mit einer Einstellanordnung (M, 22) einstellbar ist.

7. Vorrichtung nach Anspruch 6, **dadurch gekennzeichnet, dass** zum Bewegen der Dosierwalzen (11, 13) mit der oder gegen die Kraft des Pneumatikzylinders (21) ein piezoelektrisches Element (23) vorgesehen ist.

8. Vorrichtung nach einem der Ansprüche 1 bis 7, **dadurch gekennzeichnet, dass** auf der Dosierwalze (11, 13) zwischen den Kontaktflächen (12, 14) und den Messflächen (16, 18, 28) wenigstens ein Hinterschnitt (24) angeordnet ist.

9. Vorrichtung nach einem der Ansprüche 1 bis 8, **dadurch gekennzeichnet, dass** die Messanordnung (17) wenigstens einen bewegungslosen Sensor, insbesondere einen Wirbelstromaufnehmer aufweist.

10. Verfahren zum Herstellen beschichteter und/oder imprägnierter Flächengebilde (F), insbesondere mit einer Vorrichtung nach einem der Ansprüche 1 bis 9,
wobei das beschichtete und/oder imprägnierte Flächengebilde (F) durch einen einstellbaren Bemessungsspalt (10) zwischen zwei Kontaktflächen (12, 14) durchgeführt wird,
**dadurch gekennzeichnet, dass** der Abstand (b) zwischen einer in Bezug auf die eine Kontaktfläche (12) definierten, insbesondere einer zylindrischen Messfläche (16) mit geringerem Radius (d1) als die zylindrische Kontaktfläche (12) und einer in Bezug auf die zweite Kontaktfläche (14) definierten Referenzmessfläche (18) gemessen wird und dass die Breite (a) des Bemessungspaltes (10) in Abhängigkeit des Resultats der Messung eingestellt wird.

11. Verfahren nach Anspruch 10, **dadurch gekennzeichnet, dass** der Abstand zwischen der Messfläche (16) und der Referenzmessfläche (18) geregelt wird.

## Claims

1. Apparatus (1) for applying coating material (B) during the production of coated and/or impregnated flat structures (F),
having at least one application apparatus (2, 3) for applying the coating (B) onto the flat structure (F),
and having a measuring gap (10) for measuring the thickness (D) of the coated and/or impregnated flat structure (F) which can be moved through the gap (10),
it being possible for the width (a) of the measuring gap (10) to be predetermined, and
the measuring gap (10) being defined by at least one metering roll (11) which can be pressed with a contact face (12) against the flat structure (F) and by a corresponding contact face (14),
**characterized in that** the metering roll (11) and the contact face (14) are assigned in each case one measuring face (16, 18, 28), the spacing (b) of which from one another is greater than the gap width (a),
**in that** the measuring gap (10) is provided after the application apparatus (2, 3) in the running direction of the flat structure (F),
**in that**, in particular, the metering roll (11) is provided at at least one end (15) in the axial direction (A) with a cylindrical measuring face (16), the diameter (d1) of which is smaller than the diameter of the contact face (12) of the metering roll (11),
and **in that** the apparatus (1) has a measuring arrangement (17) for measuring the spacing (b) between the measuring face (16) and a reference measuring face (18, 28) which is defined in relation to the corresponding contact face (14).

2. Apparatus according to Claim 1, **characterized in that** the corresponding contact face is configured as a second metering roll (13), and **in that** the reference measuring face is configured as a second cylindrical measuring face (18), the diameter (d1) of which is smaller than the diameter (d2) of the second roll (13).

3. Apparatus according to Claim 2, **characterized in that** the metering rolls (11, 13) are mounted such that they can rotate in the opposite direction to the movement direction (R) of the flat structure (F).

4. Apparatus according to one of Claims 1 to 3, **characterized in that** the cylindrical measuring face (16) or the cylindrical measuring faces (16, 18) have a diameter (d1) which corresponds to more than 50%, preferably approximately 70% of the diameter (d2) of the contact faces (12, 14).

5. Apparatus according to Claim 3, **characterized in that** the rolls (11, 13) are mounted rotatably,
the bearing (19) of a first roll (13) being fixed and
the bearing (20) of the second metering roll (11) being displaceable in relation to the other metering roll (13) in a direction (E) perpendicularly with respect to the flat structure (F) in order to compensate for out-of-round running.

6. Apparatus according to Claim 5, **characterized in that** one metering roll (11) can be pressed by way of a pneumatic cylinder (21) with a predefined force against the other metering roll (13), and
**in that** the gap width (a) of the measuring gap (10) can be set by way of a setting arrangement (M, 22).

7. Apparatus according to Claim 6, **characterized in that** a piezoelectric element (23) is provided to move the metering rolls (11, 13) with or against the force of the pneumatic cylinder (21).

8. Apparatus according to one of Claims 1 to 7, **characterized in that** at least one undercut (24) is arranged on the metering roll (11, 13) between the contact faces (12, 14) and the measuring faces (16, 18, 28).

9. Apparatus according to one of Claims 1 to 8, **characterized in that** the measuring arrangement (17) has at least one motionless sensor, in particular an eddy-current pick-up.

10. Method for producing coated and/or impregnated flat structures (F), in particular having an apparatus according to one of Claims 1 to 9,
the coated and/or impregnated flat structure (F) being guided through a settable measuring gap (10) between two contact faces (12, 14),
**characterized in that** the spacing (b) is measured between a measuring face (16), which is defined in relation to the one contact face (12), is, in particular, cylindrical and has a smaller radius (d1) than the cylindrical contact face (12), and a reference measuring face (18) which is defined in relation to the second contact face (14), and **in that** the width (a) of the measuring gap (10) is set as a function of the result of the measurement.

11. Method according to Claim 10, **characterized in that** the spacing between the measuring face (16) and the reference measuring face (18) is regulated.

## Revendications

1. Dispositif (1) d'application d'un matériau de revêtement (B) en fabrication de produits plats (F) revêtus et/ou imprégnés,
qui présente au moins un dispositif d'application (2, 3) qui applique le revêtement (B) sur le produit plat (F) et
un interstice de définition d'épaisseur (10) qui mesure l'épaisseur (D) du produit plat (F) revêtu et/ou imprégné qui se déplace dans l'interstice (10),
l'épaisseur (a) de l'interstice de définition d'épaisseur (10) pouvant être prédéterminée et
l'interstice de définition d'épaisseur (10) étant défini par au moins une surface de contact (12) du cylindre doseur (11) qui peut être repoussé contre le produit plat (F) et par une contre-surface de contact (14),
**caractérisé en ce que**
des surfaces respectives de mesure (16, 18, 28) dont l'écart (b) mutuel est plus grand que l'épaisseur (a) de l'interstice sont associées au cylindre doseur (11) et à la surface de contact (14),
**en ce que** l'interstice de définition d'épaisseur (10) est prévu après le dispositif d'application (2, 3) dans la direction d'avancement du produit plat (F),
**en ce qu'**en particulier le cylindre doseur (11) est doté dans la direction axiale (A) et au moins à une extrémité (15) d'une surface cylindrique de mesure (16) dont le diamètre (d1) est inférieur au diamètre de la surface de contact (12) du cylindre doseur (11) et
**en ce que** le dispositif (1) présente un système de mesure (17) qui mesure la distance (b) entre la surface de mesure (16) et une surface de mesure de référence (18, 28) définie par rapport à la contre-surface de contact (14).

2. Dispositif selon la revendication 1, **caractérisé en ce que** la contre-surface de contact est configurée comme deuxième cylindre doseur (13) et **en ce que** la surface de mesure de référence est configurée comme deuxième surface cylindrique de mesure (18) dont le diamètre (d1) est plus petit que le diamètre (d2) du deuxième cylindre (13).

3. Dispositif selon la revendication 2, **caractérisé en ce que** les cylindres doseurs (11, 13) sont montés à rotation dans le sens contraire à la direction de déplacement (R) du produit plat (F).

4. Dispositif selon l'une des revendications 1 à 3, **caractérisé en ce que** la surface cylindrique de mesure (16) ou les surfaces cylindriques de mesure (16, 18) ont un diamètre (d1) qui représente plus de 50 % et de préférence environ 70 % du diamètre (d2) des surfaces de mesure (12, 14).

5. Dispositif selon la revendication 3, **caractérisé en ce que** les cylindres (11, 13) sont montés à rotation, le palier (19) d'un premier cylindre (13) étant fixe et le palier (20) du deuxième cylindre doseur (11) pouvant coulisser par rapport à l'autre cylindre doseur (13) dans une direction (E) perpendiculaire au produit plat (F) pour compenser un avancement non circulaire.

6. Dispositif selon la revendication 5, **caractérisé en ce que** le cylindre doseur (11) peut être repoussé au moyen d'un vérin pneumatique (21) et sous une force prédéterminée contre l'autre cylindre doseur (13) et **en ce que** l'épaisseur (a) de l'interstice de définition d'épaisseur (10) peut être réglée à l'aide d'un système de réglage (M, 22).

7. Dispositif selon la revendication 6, **caractérisé en ce qu'**un élément piézoélectrique (23) est prévu pour déplacer les cylindres doseurs (11, 13) à l'aide de la force du vérin pneumatique (21) ou en opposition à cette dernière.

8. Dispositif selon l'une des revendications 1 à 7, **caractérisé en ce qu'**au moins une contre-dépouille (24) est ménagée sur le cylindre doseur (11, 13) entre les surfaces de contact (12, 14) et les surfaces de mesure (16, 18, 28).

9. Dispositif selon l'une des revendications 1 à 8, **caractérisé en ce que** le système de mesure (17) présente au moins un détecteur immobile, en particulier un enregistreur de courants de Foucault.

10. Procédé de fabrication de produits plats (F) revêtus et/ou imprégnés, en particulier à l'aide d'un dispositif selon l'une des revendications 1 à 9,
dans lequel le produit plat (F) revêtu et/ou imprégné est passé dans un interstice réglable de mesure (10) entre deux surfaces de contact (12, 14),
**caractérisé en ce que**
la distance (b) entre la surface de mesure (16) définie par rapport à une surface de contact (12) et en particulier cylindrique, dont le rayon (d1) est plus petit que celui de la surface cylindrique de contact (12) et une surface (18) de mesure de référence définie par rapport à la deuxième surface (14) est mesurée et **en ce que** l'épaisseur (a) de l'interstice de définition d'épaisseur (10) est réglée en fonction du résultat de la mesure.

11. Procédé selon la revendication 10, **caractérisé en ce que** la distance entre la surface de mesure (16) et la surface de mesure de référence (18) est régulée.
